# EUROPÄISCHE PATENTSCHRIFT

(11) **EP 1 381 796 B1**
(45) Veröffentlichungstag und Bekanntmachung des Hinweises auf die Patenterteilung: **17.08.2005**
(21) Anmeldenummer: 02742876.2
(22) Anmeldetag: 06.04.2002
(51) Int. Cl.: F16H 57/02, H02K 7/116

(54) **VERSTELLANTRIEB**
ADJUSTING DRIVE
ENTRAINEMENT DE REGLAGE

(30) Priorität: 27.04.2001 DE 20107324 U
(43) Veröffentlichungstag der Anmeldung: 21.01.2004
(73) Patentinhaber: Elodrive GmbH Stellantriebstehnik, 32423 Minden (DE)
(72) Erfinder: SCHUNKE, Kurt, 32427 Minden (DE); BUCHHOLZ, Bernd, 32369 Rahden (DE); PALM, Dieter, 33824 Werther (DE); BRUNS, Gerhard, 30451 Hannover (DE)
(74) Vertreter: Specht, Peter, Dipl.-Phys.
(86) Internationale Anmeldenummer: PCT/EP2002/003832
(87) Internationale Veröffentlichungsnummer: WO 2002/088576

(56) Entgegenhaltungen:
- DE-U- 9 318 082
- DE-U- 20 107 324
- PATENT ABSTRACTS OF JAPAN vol. 1997, no. 12, 25. Dezember 1997 (1997-12-25) -& JP 09 205755 A (ASMO CO LTD), 5. August 1997 (1997-08-05)
- PATENT ABSTRACTS OF JAPAN vol. 1996, no. 10, 31. Oktober 1996 (1996-10-31) -& JP 08 154358 A (ASMO CO LTD;NIPPONDENSO CO LTD), 11. Juni 1996 (1996-06-11)
- PATENT ABSTRACTS OF JAPAN vol. 2000, no. 10, 17. November 2000 (2000-11-17) -& JP 2000 193045 A (ASMO CO LTD), 14. Juli 2000 (2000-07-14)

## Beschreibung

Die Erfindung betrifft einen Verstellantrieb, insbesondere zum Verstellen von schwenkbaren Klappen, mit einem Gehäuse, in dem ein Antriebsmotor angeordnet ist, der mit einem die Motordrehzahl herabsetzenden Antriebszug antriebstechnisch verbunden ist, der eine mindestens eine Getriebestufe bildende Räderkette beinhaltet.

Der in Frage kommende elektromotorische Verstellantrieb wird bevorzugt in der Heizungs-, Klima- und Lüftungstechnik verwendet. Die zu verstellenden Bauteile sind bevorzugt Klappen, die in Öffnungs- und Schließstellungen gebracht werden können, wobei auch die normale Grundeinstellung eine Zwischenstellung sein kann. Dem elektromotorischen Verstellantrieb ist eine Steuerung zugeordnet. Es gibt auch Einsatzfälle, bei denen ein Stellglied im Falle einer Gefahr geöffnet oder geschlossen werden sollen. Derartige Fälle sind beispielsweise das Verstellen der Klappen im Brandfalle. Bei den bisher bekannten Verstellantrieben werden die die Räderketten bildenden Räder im Normalfall auf Bolzen gelagert, die mit ihren Stirnenden in Bohrungen des Gehäuses gelagert sind.

Diese Ausführungen haben sich an sich bewährt, nachteilig ist jedoch, dass die Montage recht aufwendig ist. Auch ist der Austausch von gegebenenfalls zu ersetzenden Rädern recht aufwendig. Die Schrift JP-A-09 205 755 zeigt die Merkmale des Oberbegriffs des unabhängigen Anspruchs 1.

Der Erfindung liegt die Aufgabe zugrunde, einen Verstellantrieb der eingangs näher beschriebenen Art so zu gestalten, dass eine kompakte Bauweise mit minimalen Abmessungen des Gehäuses erreicht wird, und dass die Antriebseinheit einfach zu montieren ist, wobei ein Auswechseln der Teile in einfachster Weise möglich ist, und dass eine hohe Betriebssicherheit gewährleistet ist.

Die gestellte Aufgabe wird gelöst, indem zumindest die miteinander in Eingriff stehenden Räder der Räderkette an einem Antriebsträger gelagert sind, dass zumindest die miteinander in Eingriff stehenden Räder der Räderkette an einem Antriebsträger gelagert sind, und dass aus dem Antriebsträger und den Rädern der Räderkette eine gehäusefreie, jedoch funktionsfähige Baueinheit gebildet ist.

Im Gegensatz zu den bisher bekannten Ausführungen enthält der Verstellantrieb nicht nur das Gehäuse, sondern auch Antriebsträger, so dass durch die daran angeordneten Antriebsteile eine Baueinheit oder eine Funktionseinheit gebildet wird, die als ganzes in das Gehäuse oder in ein Gehäuseteil eingesetzt werden kann. Die Montage ist äußerst einfach, da eine äußerst gute Zugänglichkeit gegeben ist. Außerdem ist es möglich, dass die Montage mit Handlingsystemen bzw. Montagerobotern durchgeführt werden kann. Ferner ist vorteilhaft, dass die Lagerung der die Räder tragenden Bolzen nicht in den Wandungen des Gehäuses erfolgt, so dass das Gehäuse entsprechend dünnwandig sein kann, da es überwiegend eine reine Schutzfunktion ausführt.

In weiterer Ausgestaltung ist noch vorgesehen, dass der Antriebsmotor ebenfalls an dem Antriebsträger angeflanscht ist. Der besondere Vorteil dieser Anordnung liegt darin, dass durch den Antriebsmotor und durch die Räderkette bzw. durch die Räderketten eine eigenständige Funktionseinheit gebildet wird, so dass bei einer entsprechenden Auslegung des Abtriebsgliedes des Antriebszuges auf das Gehäuse verzichtet werden kann, da eine funktionsfähige Baueinheit gebildet wird, die zum Verstellen von angeschlossenen Bauteilen verwendet werden kann. Es sind dann nur die einschlägigen Sicherheitsbestimmungen zu berücksichtigen. Das Abtriebsglied des Antriebszuges ist zweckmäßigerweise ein Zahnsegment. Ein Zahnsegment ist voll ausreichend, da im Normalfall das zu verstellende Stellglied maximal um 90 Grad geschwenkt wird. Demzufolge könnte das Zahnsegment sich über einen Winkel von ebenfalls 90 Grad erstrecken. Zweckmäßigerweise ist das Zahnsegment auf eine Hohlwelle aufgesetzt. Dadurch wird nicht nur eine einfache Lagerung erzielt, sondern die Hohlwelle kann mit dem zu verstellenden Stellglied gekoppelt werden. Dazu ist es dann zweckmäßig, wenn die Hohlwelle eine Innenprofilierung aufweist. Die Verbindung mit dem Zahnsegment ist vorzugsweise durch einen Formschluß hergestellt. Die Räder der Räderkette bzw. der Räderketten liegen zweckmäßigerweise beidseitig eines plattenförmig gestalteten Antriebsträgers. Dadurch wird eine äußerst kompakte Bauweise erreicht. Die an jeder Seite miteinander in Eingriff stehenden Räder bilden zweckmäßigerweise jeweils eine Getriebestufe. Das Gehäuse des erfindungsgemäßen Verstellantriebes besteht zweckmäßigerweise aus zwei Gehäusehälften. Diese können in bevorzugter Ausführung miteinander verschraubt sein. Die Trennebene des Gehäuses liegt zweckmäßigerweise im Bereich des Antriebsträgers. Zur genauen Lagefixierung ist es zweckmäßig, wenn der Antriebsträger mit Zentrierzapfen oder dergleichen ausgestattet ist. Der Verstellantrieb kann auch als Kleinst- oder Kompaktantrieb bezeichnet werden.

Anhand der beiliegenden Zeichnung wird die Erfindung noch näher erläutert. Es zeigt:

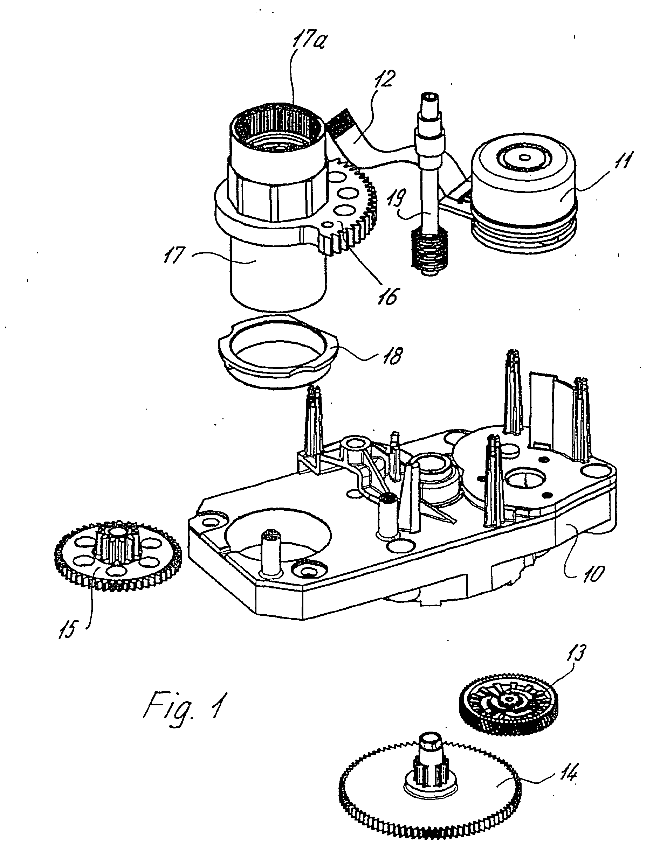

- Figur 1: den Antriebsträger des erfindungsgemäßen Verstellantriebes mit den daran angeordneten Bauteilen in einer sprengbildlichen Darstellung, den wesentlichen Aufbau zeigend.

Der als Ganzes aus Gründen der vereinfachten Darstellung nicht gezeigte Verstellantrieb ist mit einem Antriebsträger 10 ausgestattet, der plattenförmig gestaltet ist. An dem Antriebsträger 10 ist als Antrieb für den aus Zahnrädern gebildeten Antriebszug ein Antriebsmotor 11 angeflanscht. Der Antriebsmotor 11 ist eine Bürstenloser Motor, mit einem äußeren Rotor. Es können jedoch auch andere Motoren verwendet werden. Die Stromzuführung erfolgt über ein mehrere Adern enthaltendes Flachkabel 12. Auf dem nicht dargestellten Abtriebszapfen des Antriebsmotors 11 kann ein Ritzel aufgekeilt sein. Der Abtriebszapfen selbst kann jedoch auch eine Verzahnung aufweisen. Die Verzahnung des Ritzels bzw. des Abtriebszapfens steht mit einem ersten Stirnrad 13 in Eingriff. Dieses erste Stirnrad 13 steht mit der Verzahnung eines Doppelstirnrades 14 in Eingriff, dessen beide Verzahnungen eine deutlich unterschiedliche Zähnezahl aufweisen. Das erste Stirnrad 13 steht mit der die größere Anzahl von Zähnen aufweisenden Verzahnung in Eingriff. Die die kleinere Zähnezahl aufweisende Verzahnung steht mit einem an der anderen Seite des Antriebsmotors 11 gelagerten zweiten Doppelstirnrad 15 in Eingriff. Zur Reduzierung der Drehzahl steht die besagte Verzahnung des Doppelstirnrades 14 mit der die größere Zähnezahl aufweisenden Verzahnung des zweiten Doppelstirnrades 15 in Eingriff. Wie die kleinere Zähnezahl aufweisende Verzahnung des zweiten Doppelstirnrades 15 steht mit einem Zahnsegment 16 in Eingriff. Dieses Zahnsegment 16 ist auf eine Hohlwelle 17 aufgesteckt und steht drehfest damit in Verbindung, beispielsweise durch eine Profilierung. Das Zahnsegment 16 ist ebenfalls am Antriebsträger 10 drehbar gelagert. Die Hohlwelle 17 hat eine Innenprofilierung 17a, um sie antriebstechnisch und formschlüssig mit einem Stellglied zu koppeln. Durch das Bezugszeichen 18 ist noch ein Lagerring gekennzeichnet, der in eine entsprechende Bohrung oder Ausnehmung des Antriebsträgers 10 eingesetzt wird. Eine Handverstellwelle 19 kann mit einem nicht dargestellten Federelement verbunden werden, um eine Feder zu spannen, so dass beispielsweise das Stellglied in einer Richtung mittels des Antriebsmotors 11 verstellt wird, und die Rückstellbewegung durch das Federelement erfolgt. Derartige Verstellantriebe werden als Federrückläufer bezeichnet. Es ergibt sich aus der Figur 1, dass die dem Antriebsträger 10 zugeordneten Antriebsteile eine voll funktionsfähige Baueinheit bilden, die auch ohne ein Gehäuse eine Antriebsfunktion erfüllen kann. Es sein noch erwähnt, dass das Gehäuse so gestaltet ist, dass der plattenförmige Antriebsträger 10 zumindest bereichsweise die Innenflächen kontaktiert. Aus Gründen der vereinfachten Darstellung sind die zur Fixierung der Bauteile notwendigen Normalien nicht dargestellt. Es sei noch erwähnt, dass der in Rede stehende Verstellantrieb unter anderem auch zum Verstellen von Stellgliedern im Brandfall verwendet wird. Die zur Sicherstellung der Funktion auch bei erhöhten Temperaturen sind die genannten Bauteile aus Metall, beispielsweise aus Stahl oder einem Buntmetall gefertigt.

## Patentansprüche

1. Verstellantrieb, insbesondere zum Verstellen von schwenkbaren Klappen, mit einem Gehäuse, in dem ein Antriebsmotor (11) angeordnet ist, der mit einem die Motordrehzahl herabsetzenden Antriebszug (13, 14, 15, 16) antriebstechnisch verbunden ist, der eine mindestens eine Getriebestufe bildende Räderkette beinhaltet, **dadurch gekennzeichnet, dass** zumindest die miteinander in Eingriff stehenden Räder (13, 14, 15, 16) der Räderkette an einem Antriebsträger (10) gelagert sind, und dass aus dem Antriebsträger (10) und den Rädern (13, 14, 15, 16) der Räderkette eine gehäusefreie, jedoch funktionsfähige Baueinheit gebildet ist.

2. Verstellantrieb nach Anspruch 1, **dadurch gekennzeichnet, dass** der Antriebsmotor (11) an dem Antriebsträger (10) angeflanscht ist.

3. Verstellantrieb nach Anspruch 1 oder 2, **dadurch gekennzeichnet, dass** das Abtriebsglied des Antriebszuges vorzugsweise ein Zahnsegment (16) ist, welches mit einer Hohlwelle (17) drehfest gekoppelt ist.

4. Verstellantrieb nach Anspruch 3, **dadurch gekennzeichnet, dass** die Hohlwelle (17) eine Innenverzahnung oder eine Innenprofilierung (17a) zur drehfesten Verbindung mit dem zu verstellenden Stellglied aufweist.

5. Verstellantrieb nach einem oder mehreren der vorhergehenden Ansprüche 1 bis 4, **dadurch gekennzeichnet, dass** die Räder (13) zu beiden Seiten des plattenförmigen Antriebsträgers (10) angeordnet sind.

6. Verstellantrieb nach einem oder mehreren der vorhergehenden Ansprüche 1 bis 5, **dadurch gekennzeichnet, dass** der Antriebsträger (10) mit vorstehenden Zentrierzapfen oder dergleichen ausgestattet ist.

7. Verstellantrieb nach einem oder mehreren der vorhergehenden Ansprüche 1 bis 5, **dadurch gekennzeichnet, dass** das Gehäuse des Verstellantriebes (10) aus zwei Gehäusehälften gebildet ist, und dass die Trennebene der beiden Gehäusehälften im Bereich des Antriebsträgers (10) liegt.

8. Verstellantrieb nach einem oder mehreren der vorhergehenden Ansprüche 1 bis 7, **dadurch gekennzeichnet, dass** der Antriebsmotor (11) vorzugsweise ein bürstenloser Motor ist, und dass der Rotor ein Außenrotor ist.

9. Verstellantrieb nach einem oder mehreren der vorhergehenden Ansprüche 1 bis 8, **dadurch gekennzeichnet, dass** zumindest der Antriebsträger (10) sowie die daran angeordneten Räder (13-17) aus Metall, vorzugsweise aus Stahl oder einem Buntmetall gefertigt sind.

## Claims

1. Adjusting drive, in particular for adjusting pivotable flaps, having a housing containing a drive motor (11) which is drive-connected to a drive train (13, 14, 15, 16) which reduces the speed of the motor and includes at least one gear chain which forms a gear stage, **characterized in that** at least the gears (13, 14, 15, 16) of the gear chain which engage with one another are mounted on a drive mount (10), and **in that** a unit which does not have a housing but is functioned is formed from the drive mount (10) and the gears (13, 14, 15, 16) of the gear chain.

2. Adjusting drive according to Claim 1, **characterized in that** the drive motor (11) is flange-mounted on the drive mount (10).

3. Adjusting drive according to Claim 1 or 2, **characterized in that** the output element of the drive train is preferably a toothed segment (16) which is coupled to a hollow shaft (17) such that they rotate together.

4. Adjusting drive according to Claim 3, **characterized in that** the hollow shaft (17) has an internal tooth system or an internal profile (17a) for connection to the actuator, which can be adjusted, such that they rotate together.

5. Adjusting drive according to one or more of the preceding Claims 1 to 4, **characterized in that** the gears (13) are arranged on both sides of the plate-like drive mount (10).

6. Adjusting drive according to one or more of the preceding Claims 1 to 5, **characterized in that** the drive mount (10) is equipped with protruding centring pins or the like.

7. Adjusting drive according to one or more of the preceding Claims 1 to 5, **characterized in that** the housing of the adjusting drive is formed from two housing halves, and **in that** the separating plane of the two housing halves is located in the region of the drive mount (10).

8. Adjusting drive according to one or more of the preceding Claims 1 to 7, **characterized in that** the drive motor (11) is preferably a brushless motor, and **in that** the rotor is an external rotor.

9. Adjusting drive according to one or more of the preceding Claims 1 to 8, **characterized in that** at least the drive mount (10) and the gears (13-17) arranged on it are produced from metal, preferably from steel or a nonferrous metal.

## Revendications

1. Entraînement de réglage, destiné en particulier à régler des clapets pivotants, comprenant un carter dans lequel est monté un moteur d'entraînement (11) relié, selon une technique d'entraînement, à un train d'entraînement (13, 14, 15, 16) réduisant la vitesse du moteur, contenant un rouage constituant au moins un étage de transmission, **caractérisé en ce qu'**au moins les roues (13, 14, 15, 16) du rouage, qui sont en prise les unes avec les autres, sont montées sur un support d'entraînement (10), et **en ce que** le support d'entraînement (10) et les roues (13, 14, 15, 16) du rouage constituent une unité constructive sans carter, mais fonctionnelle.

2. Entraînement de réglage selon la revendication 1, **caractérisé en ce que** le moteur d'entraînement (11) est fixé par bride sur le support d'entraînement (10).

3. Entraînement de réglage selon la revendication 1 ou 2, **caractérisé en ce que** l'organe de sortie du train d'entraînement est, de préférence, un secteur denté (16) qui est couplé sans possibilité de rotation avec un arbre creux (17).

4. Entraînement de réglage selon la revendication 3, **caractérisé en ce que** l'arbre creux (17) présente une denture intérieure ou un profil intérieur (17a) pour assurer le couplage sans possibilité de rotation avec l'organe de réglage qu'il convient de régler.

5. Entraînement de réglage selon l'une ou plusieurs des revendications précédentes 1 à 4, **caractérisé en ce que** les roues (13) sont montées de part et d'autre du support d'entraînement (10) en forme de plaque.

6. Entraînement de réglage selon l'une ou plusieurs des revendications précédentes 1 à 5, **caractérisé en ce que** le support d'entraînement (10) est pourvu de tourillons de centrage qui dépassent, ou d'éléments similaires.

7. Entraînement de réglage selon l'une ou plusieurs des revendications précédentes 1 à 5, **caractérisé en ce que** le carter de l'entraînement de réglage (10) est constitué de deux moitiés de carter, et **en ce que** le plan de joint des deux moitiés de carter se situe dans la zone du support d'entraînement (10).

8. Entraînement de réglage selon l'une ou plusieurs des revendications précédentes 1 à 7, **caractérisé en ce que** le moteur d'entraînement (11) est, de préférence, un moteur sans balais, et **en ce que** le rotor est un rotor externe.

9. Entraînement de réglage selon l'une ou plusieurs des revendications précédentes 1 à 8, **caractérisé en ce qu'**au moins le support d'entraînement (10), ainsi que les roues (13-17) qui sont montées sur celui-ci, sont constitués en métal, de préférence en acier ou en métal non ferreux.
